# EUROPÄISCHE PATENTSCHRIFT

(11) **EP 2 317 308 B1**
(45) Veröffentlichungstag und Bekanntmachung des Hinweises auf die Patenterteilung: **01.05.2019**
(21) Anmeldenummer: 10014179.5
(22) Anmeldetag: 02.11.2010
(51) Int. Cl.: G01N 29/07, G01N 29/14, G01N 29/46, G01N 29/44, G01N 29/04, G01N 29/30, G01N 29/12, G01H 1/14

(54) **VORRICHTUNG UND VERFAHREN ZUM ÜBERPRÜFEN EINES BAUTEILS AUF SCHÄDEN**
METHOD AND DEVICE FOR INSPECTING A COMPONENT FOR DAMAGE
DISPOSITIF ET PROCÉDÉ DE CONTRÔLE DE DOMMAGES SUR UN COMPOSANT

(30) Priorität: 02.11.2009 DE 202009014770 U
(43) Veröffentlichungstag der Anmeldung: 04.05.2011
(73) Patentinhaber: Seuthe, Ulrich, 58300 Wetter (DE)
(72) Erfinder: Seuthe, Ulrich, 58300 Wetter (DE)
(74) Vertreter: Grosse Schumacher Knauer von Hirschhausen

(56) Entgegenhaltungen:
- WO-A1-02/079775
- FR-A1- 2 925 690
- GB-A- 2 254 425
- US-A- 4 702 111
- US-A- 5 144 838

## Beschreibung

### GEBIET DER ERFINDUNG

Die Erfindung betrifft eine Vorrichtung und ein Verfahren zum Überprüfen eines Bauteils auf Schäden nach dem Oberbegriff des Anspruchs 1 bzw. 9.

### TECHNISCHER HINTERGRUND

Eine Vorrichtung und ein Verfahren zur Zustands- oder Bruchüberwachung eines Bauteils in einem maschinellen Bearbeitungsprozess sind aus der DE 10 2006 023 716 B3 bekannt. Dort wird durch ein Bearbeitungswerkzeug bei der Bearbeitung des Bauteils ein Schallsignal im Bauteil erzeugt und die Laufzeit des Schallsignals im Bauteil zu zwei am Bauteil voneinander beabstandeten Schallsensoren wird erfasst. Ändern sich die Laufzeiten zu den Schallsensoren, kann dies ein Hinweis darauf sein, dass das Werkstück während der Bearbeitung eine Veränderung erfahren hat. Diese Veränderung kann beispielsweise ein Riss sein.

Nachteilig an der bekannten Vorrichtung und dem bekannten Verfahren ist, dass zwei Sensoren vorgesehen sind, wodurch die Schallauswertung vergleichsweise aufwändig wird. Zudem kann ein Bauteil nur während der Bearbeitung überprüft werden. Ferner ist das erzeugte Schallsignal von der Art der Bearbeitung abhängig, da eine Verwendung unterschiedlicher Werkzeuge unterschiedliche Schallsignale in dem Körper hervorruft. Ein Bohrer erzeugt beispielsweise ein anderes Schallsignal als eine Säge oder eine Fräse. Gleiches gilt für unterschiedliche Betriebsweisen des Werkzeugs. Ein schnell rotierender Bohrer oder ein Bohrer mit geringer Vorschubgeschwindigkeit erzeugt andere Geräusche als ein langsam rotierender Bohrer oder als ein Bohrer mit schnellem Vorschub. Schließlich ist eine zuverlässige Prüfung des Bauteils allein auf Basis von Laufzeiten für viele Anwendungen unzureichend.

Aus der DE 10 2004 018 683 B3 ist ein Verfahren zur Qualitätsprüfung eines Werkstücks bekannt, bei dem nach Beaufschlagen des Werkstücks mit einem Energieimpuls ein charakteristischer Wert ermittelt und dieser Wert mit einem Referenzwert verglichen wird. Mit diskreten Werten sind jedoch nur eingeschränkte Beurteilungen erziel- und nur wenige Fehler diagnostizierbar. Derartige punktuelle oder eindimensionale Vergleiche sind auch aus der DE 10 2006 048 791 bekannt. In der DE 101 37 364 A1 werden Eigenfrequenzen ermittelt und basierend darauf Werkstücke begutachtet. Die GB 2 254 425 A beschreibt ein Verfahren, bei dem zu diskreten Zeitpunkten das Frequenzspektrum analysiert wird. Allerdings variieren die optimalen Zeiten je nach Rahmenbedingungen, also Werkstück, Bearbeitung, Fehler, Anregung usw. und lassen nur eine beschränkte Auswertung zu. Weitere gattungsgemäße Vorrichtungen und Verfahren sind bekannt aus den Veröffentlichungen WO02/079775, US4702111 sowie US5144838.

Der Erfindung liegt daher die Aufgabe zugrunde, eine Vorrichtung und ein Verfahren zum Überprüfen eines Bauteils zu schaffen, die bei einfachem Aufbau eine schnelle und zuverlässige Erkennung von Schäden sicherstellt.

### DARSTELLUNG DER ERFINDUNG

Diese Aufgabe wird durch die Vorrichtung und das Verfahren nach Anspruch 1 bzw. 9 gelöst.

Demnach wird eine Vorrichtung zum Überprüfen eines Bauteils auf Schäden, mit einem Sensor zum Erfassen von Schwingungen im Bauteil und mit einer Auswerteeinheit für die erfassten Schwingungen geschaffen, bei der die Auswerteeinheit zum Erfassen eines Schwingungsspektrums, welches im Bauteil in Reaktion auf eine Beaufschlagung mit einem Energieimpuls erzeugbar ist, über einen Erfassungszeitraum und zum Vergleichen des Schwingungsspektrums mit einem Referenzspektrum, das über eine Zeitspanne vorliegt, ausgestaltet ist, wobei der Erfassungszeitraum den Bereich vor dem eingeschwungenen Bereich, in dem sich Resonanzen infolge Beaufschlagung mit dem Energieimpuls ausgebildet haben, umfasst.

Erfindungsgemäß basiert die Prüfung des Bauteils auf einem zwei- oder bevorzugt dreidimensionalen Vergleich des durch eine Anregung erzeugten Schwingungsspektrums, insbesondere eines Körperschallspektrums, mit einem Referenzspektrum.

Das Schwingungsspektrum im Bauteil entsteht durch die Anregung mit dem Energieimpuls. Dieser kann manuell beispielsweise durch einen Schlag auf das Bauteil mit einem Werkzeug oder durch einen steuerbaren Aktuator automatisiert und reproduzierbar als mechanischer oder akustischer Impuls erzeugt werden. Vorzugsweise ist der Aktuator ein Piezoschallgeber. Die genaue Art und Frequenz der Anregung ist dabei nicht besonders relevant. Wichtig ist lediglich, dass der Energieimpuls kurz, z.B. ein paar Millisekunden, und möglichst stark ist. Der Energieimpuls regt das Bauteil zu Schwingungen an. Es entsteht ein breitbandiges Schwingungsspektrum bis in den MHz-Bereich hinein. Das Schwingungsspektrum ist charakteristisch für das jeweilige Bauteil.

In besonders vorteilhafter Weise in Kombination mit dem Energieimpuls kann das Bauteil einer statischen Belastung beispielsweise in Form einer Biege-, Torsions- und/oder Druckbelastung, einer thermischen Belastung (die für die Zwecke dieser Anmeldung auch als statische Belastung bezeichnet wird) usw. ausgesetzt werden. Wird das Bauteil gebogen, einer Druckbelastung und/oder einer Torsion oder dergleichen ausgesetzt, entsteht bereits während des Biegens, Drückens bzw. Verdrehens ein charakteristisches Schwingungsspektrum, das Rückschlüsse auf das Bauteil bis hin zu einer vollständigen Fehlerdiagnose und Qualitätsanalyse ermöglicht. Während des Biegens, Drückens, Drehens, Erhitzens, Abkühlens und dergleichen sowie danach wird dann das Bauteil mit dem dynamischen Energieimpuls beaufschlagt. Unter derartiger statischer Belastung wie etwa Biegespannung oder Erhitzung oder bei hoher oder niedriger Temperatur kann der Energieimpuls weitere oder andere Charakteristika des Bauteils aufzeigen.

Die Erfassung des Schwingungsspektrums erfolgt zweckmäßigerweise über einen Sensor in Form eines Schallsensors, vorzugsweise auf Piezobasis. Das Schwingungsspektrum kann kontinuierlich oder semikontinuierlich über einen Erfassungszeitraum erfasst werden. Hierbei sind sehr kurze Messzeiten realisierbar, die vorzugsweise größenordnungsmäßig nicht länger als etwa 50 ms sein müssen. Die Zeitspanne für eine kontinuierliche Erfassung hängt von der Impulsbeaufschlagung, der Bauteilform und dem Material ab und sollte zumindest so lange gewählt werden, dass der Energieimpuls charakteristische Schwingungsmodi im Bauteil anregen kann. Sie kann vor, mit oder unmittelbar nach der Beaufschlagung mit dem Energieimpuls beginnen und sich bis zum im wesentlichen vollständigen Abklingen der erzeugten Schwingungen erstrecken, oder bis kurz vor das Einschwingen von Resonanzen, bevorzugt aber bis in den eingeschwungenen Bereich hinein und diesen umfassen. Insbesondere der Bereich zwischen Anregung und Ausbildung von Resonanzen kann sehr aufschlussreich im zeitlichen Verlauf sein und eine Fülle von zusätzlichen Informationen enthalten, die bei der Betrachtung nur im oder nur des Resonanzzeitraums fehlen, aber eine Fülle an Unterscheidungen und Diagnosen betreffend den Zustand des Bauteils ermöglichen.

Das Schwingungsspektrum kann dann mit einem Referenzspektrum verglichen werden. Das Referenzspektrum entspricht einem aufgezeichnetem Schwingungsspektrum zu einem Referenzzustand. Der Referenzzustand ist so gewählt, dass sich das Bauteil durch bestimmte Eigenschaften auszeichnet, die beispielsweise durch einen Bearbeitungsvorgang oder eine unsachgemäße Behandlung des Bauteils veränderbar sind. Das Referenzspektrum ist dabei zweckmäßigerweise über den gleichen Zeitraum aufgenommen worden, über welchen das Schwingungsspektrum aufgenommen wird, einschließlich eines etwaigen Zeitabstands zur Impulsbeaufschlagung. So kann ein Werkstück durch einen Bearbeitungsvorgang eine Beschädigung in Form eines Risses, eines Bruchs, einer Verformung oder dergleichen erfahren. Eine derartige Beschädigung führt zu einer Veränderung des Schwingungsspektrums in Bezug auf das Referenzspektrum. Ein Vergleich des erfassten Schwingungsspektrums mit dem Referenzspektrum liefert Rückschlüsse darüber, ob Beschädigungen, Materialfehler oder Materialanomalien vorliegen können. Liegen zu einzelnen Fehlern, z.B. einem bei einer bestimmten Bearbeitung häufig auftretenden Riss, Fehler-Referenzspektren vor, dann können die einzelnen Fehler auf Basis der Referenzspektren identifiziert werden.

Das Referenzspektrum kann dabei in Zeit und Frequenz beschränkt sein und nur einen Teil des erfassten Schwingungsspektrums abdecken. Beispielsweise kann das Referenzspektrum ein zwei- oder dreidimensionales Referenzmuster bilden, das in der Zeit-Frequenz-Ebene oder entlang der Zeitachse und/oder der Frequenzachse des erfassten Schwingungsspektrums verschiebbar ist und bei Übereinstimmung mit dem darunter liegenden Abschnitt des Schwingungsspektrums eine Eigenschaft identifiziert. Dies können Flanken sein oder charakteristische Wellenformen oder dergleichen.

Vorzugsweise umfasst das erzeugte Schwingungsspektrum Resonanzfrequenzen. Die Resonanzfrequenzen respektive die spektrale Lage und/oder die Intensität der Resonanzfrequenzen im Schwingungsspektrum sind eine dem Bauteil innewohnende Eigenschaft. Die Schwingungen klingen an den Resonanzfrequenzen weniger schnell ab, wodurch ihre Anregung bevorzugt erfassbar ist. Schäden am Bauteil verändern die akustischen Eigenschaften des Bauteils, was sich in einer Veränderung von Lage und/oder Intensität der Resonanzfrequenzen niederschlägt. Insofern weist ein Bauteil mit einer Materialanomalie wie etwa einem Riss oder Ähnlichem ein Resonanzspektrum auf, das sich von dem Resonanzspektrum des unbeschädigten Bauteils unterscheidet.

Wenn sich Resonanzfrequenzen in einem unbeschädigten Referenzbauteil herausbilden, oder die Impulsbeaufschlagung in kurzen Abständen wiederholt wird zur Erzeugung einer Resonanz, kann der Vergleich zwischen den Spektren auf das Erkennen wenigstens einer Resonanzfrequenz im Schallspektrum beschränkt werden. Eine derartige Erkennung ist mit einfachen Berechnungen in der computerbasierten Auswerteeinheit und sogar ohne Berechnungen mit einfachen technischen Mitteln, z.B. einem analogen Schwingkreis, der vom Schallsensorausgang gespeist wird, durchführbar.

So kann es zur Vereinfachung der Auswertung des Schwingungsspektrums zweckmäßig sein, wenn eine Auswerteeinheit vorgesehen ist, in welcher Resonanzfrequenzen des Schwingungsspektrums mit Abschnitten des Referenzspektrums vergleichbar sind. Dabei sind auch die Abschnitte des Referenzspektrums vorzugsweise durch Resonanzfrequenzen gebildet. Es kann demnach für einen 'Fingerabdruck'-Vergleich ausreichen, die Resonanzfrequenzen des aufgezeichneten Schwingungsspektrums zu isolieren und mit denen des Referenzspektrums zu vergleichen. Der nichtresonante Untergrund bleibt dabei im Wesentlichen unbeachtet. Die Menge an zu verarbeitenden Signaldaten wird dadurch erheblich reduziert, wodurch die Auswertung beschleunigt wird und weniger anspruchsvolle apparative Ressourcen beansprucht.

Das Bauteil kann während oder nach einem oder mehreren Fertigungs- oder Bearbeitungsprozessen geprüft werden. Schäden in einem derartigen Bauteil können beispielsweise (Haar-)Risse sein. Solche Schäden können durch eine fehlerhafte Bearbeitung entstehen oder durch fehlerhaftes Material, aus dem der Körper gebildet ist.

Bei einer bevorzugten Ausgestaltung der erfindungsgemäßen Vorrichtung kann vorgesehen sein, dass der Aktor und/oder der Sensor piezoelektrische und/oder piezokeramische Mittel umfassen. Bei dieser Ausgestaltung ist es zur weiteren Vereinfachung der Vorrichtung möglich, Aktor und Sensor in einer Komponente zu vereinen. Ein piezoelektrisches oder piezokeramisches Modul eignet sich gleichermaßen zur Schwingungserzeugung wie auch zur Schwingungserfassung. Ein weiterer Vorteil besteht darin, dass von einem Piezo-Modul emittierte Schallsignale spektral sehr gut an Körperschallfrequenzen ankoppelbar sind.

Es kann ferner eine Steuereinheit für den Aktor und den Sensor vorgesehen sein. Die Steuereinheit kann beispielsweise in regelmäßigen zeitlichen Abständen einen Energieimpuls zur Anregung von Schwingungen auf das Bauteil zu übertragen. Dabei kann vorgesehen sein, dass die Erfassung des Schwingungsspektrums während der Schallerzeugung unterbrochen wird, so dass bei der Erfassung nur angeregter Körperschall, nicht jedoch der Anregungsimpuls detektiert wird.

Zur Verbesserung der Reproduzierbarkeit der Überprüfung sollte das Bauteil nicht in Kontakt mit anderen Maschinenelementen sein, da durch diesen Kontakt das Referenzspektrum verfälscht werden könnte. Ein besonderer Schallschutz ist jedoch nicht erforderlich.

Erfindungsgemäß kann die Energieimpulserzeugung einem Erzeugungsintervall zugeordnet sein. Entsprechend kann die Schwingunsspektrumerfassung einem Erfassungsintervall zugeordnet sein. Das Erfassungsintervall kann deutlich kürzer als eine Sekunde (s) sein, vorzugsweise weniger als 50 ms (1 ms = 10⁻³ s) und länger als 10 µs (1 µs = 10⁻⁶ s). Durch die kurze Dauer des Erfassungsintervalls kann das Verfahren problemlos in einen Produktions- oder Bearbeitungsablauf integriert werden, an dem das Bauteil beteiligt ist. Eine Unterbrechung der Bearbeitungsprozeduren ist nicht erforderlich, da das Verfahren in deutlich weniger als einer Sekunde ein Ergebnis hinsichtlich der Qualität des Bauteils liefert. Das Verfahren kann auch in mehrere Produktions- oder Bearbeitungsschritte integriert werden. So erhält man nach jedem Bearbeitungsschritt eine Information über vorhandene Schäden oder Anomalien.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Vorrichtung zur Überprüfung von Schäden an Körpern dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

- Fig. 1: zeigt eine schematische Darstellung einer Vorrichtung zur Überprüfung eines Bauteils.
- Fig. 2: zeigt einen zeitlichen Verlauf.

### DETAILLIERTE BESCHREIBUNG VON AUSFÜHRUNGSBEISPIELEN

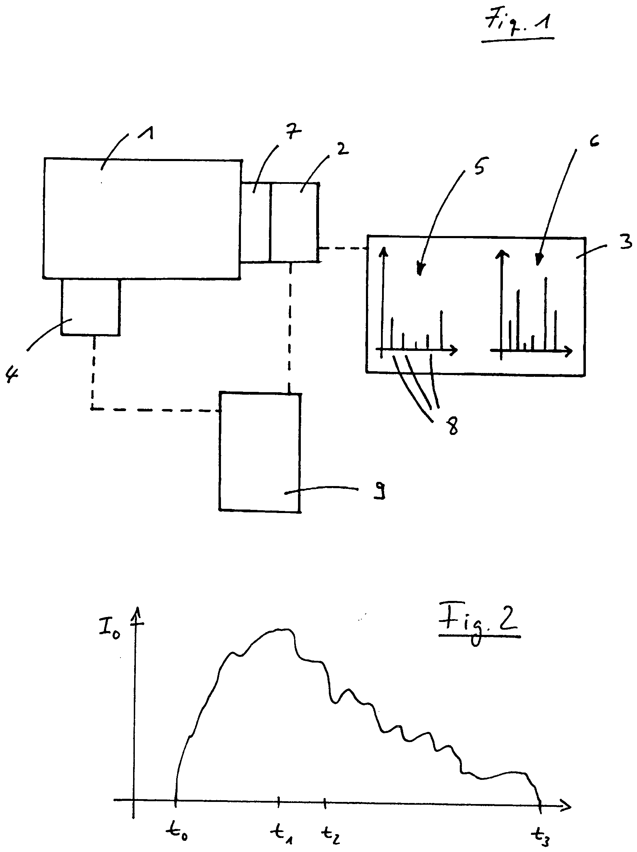

Die in Fig. 1 beispielhaft dargestellte Vorrichtung zur Überprüfung eines Bauteils 1 auf Schäden umfasst einen an das Bauteil 1 koppelbaren Sensor 2, der mit einer Auswerteeinheit 3 verbindbar ist. Die Kopplung kann beispielsweise magnetisch erfolgen oder durch eine mechansiche Verbindung, z.B. eine Verschraubung oder Klemmung. Der Sensor 2 dient der Erfassung von Schwingungen im Bauteil 1, insbesondere von Körperschall, der im Bauteil 1 durch einen Aktor 4 erzeugbar ist, welcher ebenfalls an das Bauteil 1 koppelbar ist. Koppelbar heißt, dass ein geeigneter Kontakt zwischen dem Bauteil 1 und dem Aktor 4 bzw. dem Sensor 2 herstellbar ist, wodurch beispielsweise ein Schallsignal oder ein mechanischer Impuls von dem Aktor 4 auf das Bauteil 1 übertragbar ist. Durch den Aktor 4 ist das Bauteil 1 zu Schwingungen anregbar, die vom Sensor 2 erfassbar sind. Der Aktor 4 und/oder der Sensor 2 können piezoelektroische Mittel 7 umfassen. Wahlweise können auch piezokeramische Mittel vorgesehen sein.

Unmittelbar nach oder um eine kurze Zeitspanne versetzt zur Schwingungsanregung des Bauteils 1 durch Beaufschlagung mit einem Energieimpuls wird das Schwingungsspektrum des Körpers 1 mit dem Sensor 2 erfasst.

In der Fig. 1 ist beispielhaft ein Schwingungsspektrum 5 dargestellt, das zu einem diskreten Zeitpunkt erfasst worden ist und zweidimensional ist, wobei auf der horizontalen Achse die Schwingungsfrequenz und auf der vertikalen Achse die Intensität aufgetragen ist, oder Funktionen davon. Alternativ hierzu könnte der Verlauf der Schwingungsspektrums als Funktion der Zeit dreidimensional erfasst und als Fläche dargestellt werden. Das erfasste Schwingungsspektrum 5 wird mit einem Referenzspektrum 6 verglichen. Beide Spektren 5, 6 können dabei wie illustriert Resonanzfrequenzen 8 umfassen. Es kann vorgesehen sein, dass die Auswerteeinheit 3 das Schwingungsspektrum 5 abschnittsweise analysiert. Dabei können die Resonanzfrequenzen 8 des Schwingungsspektrums 5 mit einem oder mehreren Abschnitten des Referenzspektrums 6 verglichen werden. Ein Abschnitt des Referenzspektrums 6 kann beispielsweise durch eine oder mehrer Resonanzfrequenzen 8 gebildet sein. Der Grad der Übereinstimmung oder Abweichung kann verwendet werden, um einen Schaden festzustellen oder die Schadenfreiheit.

In Fig. 2 ist beispielhaft ein Verlauf der Schwingungsintensität als Funktion der Zeit dargestellt. Die Beaufschlagung mit dem Energieimpuls erfolgt bei t₀. Es werden bei ausreichender Intensität Schwingungen "aller" Frequenzen angeregt. Es bilden sich Resonanzen heraus und die Schwingungen mit Frequenzen, die nicht den Resonanzfrequenzen entsprechen, fallen deutlich schneller ab. Im dargestellten Beispiel bilden sich im Bereich t₁ bis t₂ erkennbare charakteristische Resonanzen heraus. Nach t₂ fallen die Schwingungen bis auf nahezu Null ab. Erfindungsgemäß wird der zeitliche Verlauf, wie er beispielhaft in Fig. 2 dargestellt ist, für ein insbesondere breitbandiges Frequenzspektrum erfasst, so dass das Schwingungsspektrum als dreidimensionales Frequenz-Zeit-Spektrum mit der Amplitude oder Intensität als z-Achse vorliegt, also als Landschaft.

Besonders interessant kann der Bereich zwischen t₀ und t₁ sein, der im Stand der Technik bei der Resonanzbetrachtung nicht berücksichtigt wird, aber wertvolle Differenzierungsmöglichkeiten für verschiedene Zustände und Fehler enthält.

Wenn man den Beginn des Informationen enthaltenden Zeitabschnitts bei Beginn der Anregung bei t₀ setzt und das Ende bei t₃, wenn die Intensität auf beispielsweise 1%, 2%, 5% oder 10% des Maximalwerts I₀ abgeklungen ist, wird das Schwingungsspektrum vorzugsweise zwischen 0 und 100% davon, oder zwischen 1%, 2%, 5% oder 10% und 80%,90% oder 95% davon, oder bis 10%, 15%, 20%, 30%, 40%, 50%, 60% davon erfasst, so dass möglichst der gesamte Bereich oder nur der Anfangsbereich vor Ausbildung der Resonanzen oder der Anfangs- und Resonanzbereich jeweils ggf. mit einem auslaufenden Bereich zum Ende hin erfasst werden.

Eine Steuereinheit 9 kann vorgesehen sein, mit der der Aktor 4 und/oder die Signalerfassung durch den Sensor 2 steuerbar sind. Die Steuereinheit 9 kann hierzu mit dem Aktor 4 und dem Sensor 2 verbunden sein.

### BEZUGSZEICHENLISTE

- 1: Bauteil
- 2: Sensor
- 3: Auswerteeinheit
- 4: Aktor
- 5: Schwingungsspektrum
- 6: Referenzspektrum
- 7: piezoelektrische Mittel
- 8: Resonanzfrequenz
- 9: Steuereinheit

## Patentansprüche

1. Vorrichtung zum Überprüfen eines Bauteils (1) auf Schäden, mit einem Sensor zum Erfassen von Schwingungen im Bauteil (1) und mit einer Auswerteeinheit (3) für die erfassten Schwingungen, wobei die Auswerteeinheit (3) zum Erfassen eines Schwingungsspektrums, welches im Bauteil (1) in Reaktion auf eine Beaufschlagung mit einem Energieimpuls erzeugbar ist, als Funktion der Zeit über einen Erfassungszeitraum und zum Vergleichen des zeitlichen Verlaufs des Schwingungsspektrums mit einem Referenzspektrum, das über eine Zeitspanne vorliegt, ausgestaltet ist, **dadurch gekennzeichnet, dass** der Erfassungszeitraum den Bereich vor dem eingeschwungenen Bereich, in dem sich Resonanzen infolge Beaufschlagung mit dem Energieimpuls ausgebildet haben, umfasst.

2. Vorrichtung nach Anspruch 1, **dadurch gekennzeichnet, dass** das Schwingungsspektrum kontinuierlich oder semikontinuierlich in Reaktion auf die Beaufschlagung mit einem Energieimpuls unter statischer Belastung erfasst wird.

3. Vorrichtung nach Anspruch 1 oder 2, **dadurch gekennzeichnet, dass** ein Aktor zum Beaufschlagen des Bauteils mit dem Energieimpuls in Form eines akustischen und/oder mechanischen Impulses und/oder ein Aktor zum Erzeugen einer statischen Belastung wie etwa einer Biege-, Torsions- und/oder Druckbelastung vorgesehen ist.

4. Vorrichtung nach einem der Ansprüche 1 bis 3, **dadurch gekennzeichnet, dass** die Auswerteeinheit (3) zum Erkennen wenigstens einer Resonanzfrequenz (8) im Schwingungsspektrum (5) ausgestaltet ist.

5. Vorrichtung nach einem der Ansprüche 1 bis 4, **dadurch gekennzeichnet, dass** der Vergleich zwischen erfasstem Schwingungsspektrum und Referenzspektrum Anstiegs- und/oder Abfallflanken im zeitlichen Verlauf berücksichtigt.

6. Vorrichtung nach einem der Ansprüche 1 bis 5, **dadurch gekennzeichnet, dass** der Vergleich zwischen erfasstem Schwingungsspektrum und Referenzspektrum eine zwei- oder dreidimensionale Mustererkennung umfasst, wobei das Referenzspektrum ein zweibzw. dreidimensionales Referenzmuster bildet.

7. Vorrichtung nach einem der Ansprüche 1 bis 6, **dadurch gekennzeichnet, dass** das Referenzspektrum über eine Zeitspanne vorliegt, die kürzer als der Erfassungszeitraum ist, einen Frequenzteilbereich des aufgenommenen Schwingungsspektrums zwischen einem unteren und einem oberen Frequenzwert bildet und/oder einen oder mehrere Teilbereiche in der Zeit-, Intensitäts- und/oder Frequenzdimension bildet.

8. Vorrichtung nach einem der Ansprüche 1 bis 7, **dadurch gekennzeichnet, dass** der Erfassungszeitraum den Bereich zwischen der Beaufschlagung mit dem Energieimpuls und der Ausbildung von Resonanzen, den eingeschwungenen Bereich und/oder den Bereich unmittelbar vor dem Abklingen der Intensität auf Null umfasst.

9. Verfahren zum Überprüfen eines Bauteils (1) auf Schäden, wobei Schwingungen im Bauteil (1) von einem Sensor (2) erfasst und in einer Auswerteeinheit (3) ausgewertet werden, wobei das Bauteil (1) mit einem Energieimpuls beaufschlagt und das durch den Energieimpuls im Bauteil (1) erzeugte Schwingungsspektrum über einen Erfassungszeitraum erfasst und mit einem Referenzspektrum, das über eine Zeitspanne vorliegt, verglichen wird, **dadurch gekennzeichnet, dass** der Erfassungszeitraum den Bereich vor dem eingeschwungenen Bereich, in dem sich Resonanzen infolge Beaufschlagung mit dem Energieimpuls ausgebildet haben, umfasst.

10. Verfahren nach Anspruch 9, **dadurch gekennzeichnet, dass** das Bauteil (1) einer statischen Belastung ausgesetzt wird und das im Bauteil (1) durch den Energieimpuls und die statische Belastung erzeugte Schwingungsspektrum kontinuierlich oder semikontinuierlich erfasst wird.

11. Verfahren nach Anspruch 9 oder 10, **dadurch gekennzeichnet, dass** der Energieimpuls als akustischer und/oder mechanischer Impuls und/oder die statische Belastung in Form einer Biege-, Torsions- und/oder Druckbelastung gebildet wird.

12. Verfahren nach einem der Ansprüche 9 bis 11, **dadurch gekennzeichnet, dass** der Vergleich zwischen erfasstem Schwingungsspektrum und Referenzspektrum Anstiegs- und/oder Abfallflanken im zeitlichen Verlauf berücksichtigt.

13. Verfahren nach einem der Ansprüche 9 bis 12, **dadurch gekennzeichnet, dass** der Vergleich zwischen erfasstem Schwingungsspektrum und Referenzspektrum eine zwei- oder dreidimensionale Mustererkennung umfasst, wobei das Referenzspektrum ein zweibzw. dreidimensionales Referenzmuster bildet.

14. Verfahren nach einem der Ansprüche 9 bis 13, **dadurch gekennzeichnet, dass** das Referenzspektrum über eine Zeitspanne vorliegt, die kürzer als der Erfassungszeitraum ist, einen Frequenzteilbereich des aufgenommenen Schwingungsspektrums zwischen einem unteren und einem oberen Frequenzwert bildet und/oder einen oder mehrere Teilbereiche in der Zeit-, Intensitäts- und/oder Frequenzdimension bildet.

15. Verfahren nach einem der Ansprüche 9 bis 14, **dadurch gekennzeichnet, dass** der Erfassungszeitraum den Bereich zwischen der Beaufschlagung mit dem Energieimpuls und der Ausbildung von Resonanzen, den eingeschwungenen Bereich und/oder den Bereich unmittelbar vor dem Abklingen der Intensität auf Null umfasst.

16. Verfahren nach einem der Ansprüche 9 bis 15, **dadurch gekennzeichnet, dass** das Schwingungsspektrum breitbandig, insbesondere ab 50 Hz, 200 Hz oder 500 Hz bis 5 MHz, 5,0 MHz oder 500 MHz, ab der Anregung oder 5 ms, 10 ms, 15 ms danach, über den eingeschwungenen Zustand mit herausgebildeten Resonanzen bis zum im wesentlichen vollständigen Abklingen oder 5 ms, 10 ms, 15 ms, 50 ms davor erfasst wird.

17. Verfahren nach einem der Ansprüche 9 bis 16, **dadurch gekennzeichnet, dass** die Spektren mit einer hohen Zeitauflösung zum Erkennen der Flankendynamik erfasst werden.

## Claims

1. A device for examining a component (1) for damage, having a sensor for detecting vibrations in the component (1) and having an evaluation unit (3) for the detected vibrations, the evaluation unit (3) being configured for detecting a vibrational spectrum, which can be generated in the component (1) as a reaction to loading with an energy pulse, as a function of time over a detection period and for comparing the temporal course of the vibrational spectrum with a reference spectrum, which is present over a time period, **characterized in that** the detection period comprises the region prior to the steady-state region, in which resonance has formed as a consequence of loading with the energy pulse.

2. The device according to Claim 1, **characterized in that** the vibrational spectrum is detected continuously or semi-continuously as a reaction to loading with an energy pulse under static loading.

3. The device according to Claim 1 or 2, **characterized in that** an actuator for loading the component with the energy pulse in the form of an acoustic and/or mechanical pulse and/or an actuator for generating a static load, such as a bending, torsional and/or pressure load is provided.

4. The device according to one of Claims 1 to 3, **characterized in that** the evaluation unit (3) is configured for detecting at least one resonant frequency (8) in the vibrational spectrum (5).

5. The device according to one of Claims 1 to 4, **characterized in that** the comparison between detected vibrational spectrum and reference spectrum takes account of leading and/or trailing edges in the temporal course.

6. The device according to one of Claims 1 to 5, **characterized in that** the comparison between detected vibrational spectrum and reference spectrum comprises a two- or three-dimensional pattern recognition, wherein the reference spectrum forms a two- or three-dimensional reference pattern.

7. The device according to one of Claims 1 to 6, **characterized in that** the reference spectrum is present over a time period, which is shorter than the detection period, forms a frequency partial region of the recorded vibrational spectrum between a lower and an upper frequency value and/or forms one or more partial regions in the time, intensity and/or frequency dimension.

8. The device according to one of Claims 1 to 7, **characterized in that** the detection period comprises the region between loading with the energy pulse and the formation of resonance, the steady-state region and/or the region directly before the decay of the intensity to zero.

9. A method for examining a component (1) for damage, vibrations in the component (1) being detected by a sensor (2) and evaluated in an evaluation unit (3), the component (1) being loaded with an energy pulse and the vibrational spectrum generated in the component (1) by the energy pulse over a detection period being detected and compared with a reference spectrum, which is present over a time period, **characterized in that** the detection period comprises the region prior to the steady-state region, in which resonance has formed as a consequence of loading with the energy pulse.

10. The method according to Claim 9, **characterized in that** the component (1) is exposed to a static load and the vibrational spectrum, generated in the component (1) by the energy pulse and the static load, is detected continuously or semi-continuously.

11. The method according to Claim 9 or 10, **characterized in that** the energy pulse is formed as an acoustic and/or mechanical pulse, and/or the static load is formed in the form of a bending, torsional and/or pressure load.

12. The method according to one of Claims 9 to 11, **characterized in that** the comparison between detected vibrational spectrum and reference spectrum takes account of leading and/or trailing edges in the temporal course.

13. The method according to one of Claims 9 to 12, **characterized in that** the comparison between detected vibrational spectrum and reference spectrum comprises a two- or three-dimensional pattern recognition, wherein the reference spectrum forms a two- or three-dimensional reference pattern.

14. The method according to one of Claims 9 to 13, **characterized in that** the reference spectrum is present over a time period, which is shorter than the detection period, forms a frequency partial region of the recorded vibrational spectrum between a lower and an upper frequency value and/or forms one or more partial regions in the time, intensity and/or frequency dimension.

15. The method according to one of Claims 9 to 14, **characterized in that** the detection period comprises the region between loading with the energy pulse and the formation of resonance, the steady-state region and/or the region directly before the decay of the intensity to zero.

16. The method according to one of Claims 9 to 15, **characterized in that** the vibrational spectrum is detected in a broadband manner, particularly from 50 Hz, 200 Hz or 500 Hz to 5 MHz, 50 MHz or 500 MHz, starting from the excitation or 5 ms, 10 ms, 15 ms thereafter, over the steady state with the resonance produced until substantially complete decay or 5 ms, 10 ms, 15 ms, 50 ms therebefore.

17. The method according to one of Claims 9 to 16, **characterized in that** the spectra are detected with a high temporal resolution for detecting the edge dynamics.

## Revendications

1. Dispositif de contrôle de dommages sur un composant (1) avec un capteur pour la saisie des vibrations dans le composant (1) et avec une unité d'évaluation (3) pour les vibrations saisies, l'unité d'évaluation (3) étant structurée pour la saisie d'un spectre de vibration, lequel peut être produit dans le composant (1) en réaction à une sollicitation avec une impulsion d'énergie, en tant que fonction de temps sur une période de saisie et en comparaison du profil temporel du spectre de vibration à un spectre de référence, qui est présent sur une courte période de temps, **caractérisé en ce que** la période de saisie comprend la zone avant la zone transitoire dans laquelle les résonances se sont constituées en raison de la sollicitation avec l'impulsion d'énergie.

2. Dispositif selon la revendication 1, **caractérisé en ce que** le spectre de vibration est saisi en continu ou de façon semi-continue en réaction à la sollicitation avec une impulsion d'énergie sous charge statique.

3. Dispositif selon la revendication 1 ou 2, **caractérisé en ce qu'**il est prévu un actionneur pour solliciter le composant avec une impulsion d'énergie sous la forme d'une impulsions acoustique et/ou mécanique et/ou un actionneur pour produire une charge statique comme à peu près une charge de flexion, de torsion et/ou de pression.

4. Dispositif selon l'une quelconque des revendications 1 à 3, **caractérisé en ce que** l'unité d'évaluation (3) est structurée pour identifier au moins une fréquence de résonance (8) dans le spectre de vibration (5).

5. Dispositif selon l'une quelconque des revendications 1 à 4, **caractérisé en ce que** la comparaison entre le spectre de vibration saisi et le spectre de référence prend en considération les flancs ascendants et/ou descendants dans le profil temporel.

6. Dispositif selon l'une quelconque des revendications 1 à 5, **caractérisé en ce que** la comparaison entre le spectre de vibration saisi et le spectre de référence comprend une identification modèle bi- ou tridimensionnelle, le spectre de référence formant un modèle de référence bi- ou tridimensionnel.

7. Dispositif selon l'une quelconque des revendications 1 à 6, **caractérisé en ce que** le spectre de référence existe sur une période de temps courte, qui est plus courte que la période de saisie, forme une zone partielle de fréquence du spectre de vibration enregistré entre une valeur de fréquence inférieure et supérieure et/ou forme une ou plusieurs zones partielles dans la dimension de temps, d'intensité et/ou de fréquence.

8. Dispositif selon l'une quelconque des revendications 1 à 7, **caractérisé en ce que** la période de saisie comprend la zone entre la sollicitation avec l'impulsion d'énergie et la constitution des résonances, la zone transitoire et/ou la zone directement avant la décroissance de l'intensité à zéro.

9. Procédé de contrôle de dommages sur un composant (1) les vibrations dans le composant (1) étant saisies par un capteur (2) et évaluées dans une unité d'évaluation (3), le composant (1) étant sollicité avec une impulsion d'énergie et le spectre de vibration produit dans le composant (1) par l'impulsion d'énergie étant saisi sur une période de saisie et comparé à un spectre de référence qui est présent sur une courte période de temps, **caractérisé en ce que** la période de saisie comprend la zone avant la zone transitoire dans laquelle les résonances se sont constituées en raison de la sollicitation avec l'impulsion d'énergie.

10. Procédé selon la revendication 9, **caractérisé en ce que** le composant (1) est exposé à une charge statique et le spectre de vibration produit dans le composant (1) par l'impulsion d'énergie et la charge statique est saisi en continu ou de façon semi-continue.

11. Procédé selon la revendication 9 ou 10, **caractérisé en ce que** l'impulsion d'énergie est formée sous la forme d'une impulsion acoustique et/ou mécanique et/ou la charge statique est formée sous la forme d'une charge de flexion, de torsion et/ou de pression.

12. Procédé selon l'une quelconque des revendications 9 à 11, **caractérisé en ce que** la comparaison entre le spectre de vibration saisi et le spectre de référence prend en considération les flancs ascendants et/ou descendants dans le profil temporel.

13. Procédé selon l'une quelconque des revendications 9 à 12, **caractérisé en ce que** la comparaison entre le spectre de vibration saisi et le spectre de référence comprend une identification modèle bi- ou tridimensionnelle, le spectre de référence formant un modèle de référence bi- ou tridimensionnel.

14. Procédé selon l'une quelconque des revendications 9 à 13, **caractérisé en ce que** le spectre de référence existe sur une période de temps courte, qui est plus courte que la période de saisie, forme une zone partielle de fréquence du spectre de vibration enregistré entre une valeur de fréquence inférieure et supérieure et/ou forme une ou plusieurs zones partielles dans la dimension de temps, d'intensité et/ou de fréquence.

15. Procédé selon l'une quelconque des revendications 9 à 14, **caractérisé en ce que** la période de saisie comprend la zone entre la sollicitation avec l'impulsion d'énergie et la constitution des résonances, la zone transitoire et/ou la zone directement avant la décroissance de l'intensité à zéro.

16. Procédé selon l'une quelconque des revendications 9 à 15, **caractérisé en ce que** le spectre de vibration est saisi sur une largeur de bande, notamment de 50 Hz, 200 Hz ou 500 Hz à 5 MHz, 50 MHz ou 500 MHz, à partir de l'excitation ou 5 ms, 10 ms, 15 ms après cela, pendant l'état transitoire avec les résonances produites jusqu'à la décroissance pour l'essentiel complète ou 5 ms, 10 ms, 15 ms, 50 ms avant cela.

17. Procédé selon l'une quelconque des revendications 9 à 16, **caractérisé en ce que** les spectres sont saisis avec une résolution dans le temps élevée pour identifier la dynamique de flancs.
